## Europäisches Patentamt

## European Patent Office

## Office européen des brevets

(11) Veröffentlichungsnummer: **0 163 193**
**A1**

(12) # EUROPÄISCHE PATENTANMELDUNG

(21) Anmeldenummer: **85105857.8**

(22) Anmeldetag: **13.05.85**

(51) Int. Cl.⁴: **A 01 D 78/12**

(30) Priorität: **28.05.84 DE 3419847**

(43) Veröffentlichungstag der Anmeldung:
**04.12.85 Patentblatt 85/49**

(84) Benannte Vertragsstaaten:
**AT BE CH DE FR GB LI NL SE**

(71) Anmelder: **H. Niemeyer Söhne GmbH & Co. KG**
**Heinrich-Niemeyer-Strasse 52**
**D-4446 Hörstel(DE)**

(72) Erfinder: **Ungruh, Josef**
**Birkhahnweg 7**
**D-4440 Rheine(DE)**

(72) Erfinder: **Rohlmann, Maximilian**
**Rosenstrasse 18**
**D-4446 Hörstel-Riesenbeck(DE)**

(74) Vertreter: **Busse & Busse Patentanwälte**
**Postfach 1226 Grosshandelsring 6**
**D-4500 Osnabrück(DE)**

(54) **Heuwerbungsmaschine.**

(57) Die Heuwerbungsmaschine umfaßt mindestens einem um eine aufwärtsgerichtete Drehachse (2) umlaufend angetriebenen Kreiselrechen (1), der mit Zinken (3) besezte Zinkenträger (4) aufweist. Durch ein Steuergetriebe (7, 8, 19, 20) sind die Zinkenträger (4) zwischen einer Arbeitsstellung, in der sich die Zinken (3) abwärts zum Boden hin erstrecken, und einer Aushubstellung, in der die Zinken (3) eine etwa horizontale Ausrichtung einnehmen, verschwenkbar. Eine Stellvorrichtung (21) überführt bei Betätigung einer Antriebsvorrichtung (16, 18) sämtliche Zinkenträger (4) in die Aushubstellung. Unter dem bzw. jedem Kreiselrechen (1) ist ein mittels eines Anschlußteils (33) am Maschinengestell abgestütztes, höhenverstellbares Stützrad (23) angeordnet. Dabei ist der Anschlußteil (33) des Stützrades (23) an einem axial entlang der Drehachse (2) des Kreiselrechens (1) zwischen einer oberen Betriebsstullung und einer unteren Transportstellung am Maschinengestell beweglich geführten Trägerteil (22) angebracht, und die Antriebsvorrichtung (16, 18) für die Stellvorrichtung (22) bildet zugleich die Antriebsvorrichtung für den Trägerteil (22).

EP 0 163 193 A1

Croydon Printing Company Ltd.

./...

Fig. 1

## Heuwerbungsmaschine

Die Erfindung bezieht sich auf eine Heuwerbungsmaschine gemäß dem Oberbegriff des Anspruchs 1.

Die Überführung der Zinken in eine Aushubstellung dient bei Maschinen dieser Art dazu, das Befahren von Straßen oder das Überfahren von Schwaden oder sonstigen Erhebungen zu erleichtern. Dies ist, im Gegensatz zu Anbaumaschinen, die mittels der Dreipunkthydraulik des Schleppers vom Boden abhebbar sind, insbesondere bei mehr- bzw. vielkreiseligen Maschinen von Bedeutung, die wegen ihres Gewichtes als Anhängemaschinen ausgeführt sind.

Bei einer bekannten Maschine der eingangs genannten Art (DE-PS 21 67 111) wird der Kraftfluß zwischen den Zinkenträgern und dem Steuergetriebe durch eine Schalteinrichtung unterbrochen, und die Zinkenträger werden bei ausgeschaltetem Kraftfluß durch die Antriebswirkung einer an ihnen angreifenden Feder in die Aushubstellung verschwenkt.

Eine derartige Ausbildung ermöglicht zwar ein vorübergehendes Ausheben der Zinken sowie ein Rückführen der Zinken in deren Arbeitsstellung während des Umlaufes der Kreiselrechen, jedoch ist eine derartige Ausführung baulich recht kompliziert und erreicht in der Aushubstellung der Zinken eine Bodenfreiheit, die sich auf den Abstand der Umlaufbahn der Zinkenträger zum Boden beschränkt.

0163193

Der Erfindung liegt die Aufgabe zugrunde, eine Heuwerbungsmaschine der im Oberbegriff des Anspruchs 1 angegebenen Art
zu schaffen, die bei großer baulicher Einfachheit den Übergang in eine Transportstellung mit wesentlich größerer Bodenfreiheit der Kreiselrechen ermöglicht.

Diese Aufgabe löst die Erfindung mit den Merkmalen des kennzeichenden Teils des Anspruchs 1.

Die erfindungsgemäße Maschine erbringt zusätzlich zur Verschwenkbarkeit der Zinken in ihre Aushubstellung eine Vergrößerung des Bodenabstands der Zinkenkreisel durch Ausfahren des Stützrades, so daß die Maschine eine außerordentlich große Bodenfreiheit für die Zinkenkreisel in der Transportstellung erreicht. Dies sichert insbesondere auch Anhängemaschinen eine Bodenfreiheit bei Transportfahrten und beim Überfahren von Erhebungen auf dem Boden, wie sie bisher nur bei
Anbaumaschinen erreichbar war. Im Gegensatz zu Anbaumaschinen
ist es bei Anhängemaschinen leicht möglich, diese einseitig
zum Schlepper versetzt anzuordnen, um ein Überfahren von
Schwaden durch Schlepperreifen zu vermeiden.

Eine wegen ihrer besonderen Einfachheit bevorzugte Ausgestaltung geht von einer Maschine gemäß dem Oberbegriff des
Anspruchs 2 (DE-PS 29 30 152) aus, bei der jedoch die zweite
Steuerkurve dazu dient, die Zinkenträger gemeinsam in eine
Lage zu überführen und in dieser zu fixieren, in der die
Zinken senkrecht zum Boden ausgerichtet sind. Gemäß dem
kennzeichenden Teil des Anspruchs 2 verwirklicht die erfindungsgemäße Ausgestaltung eine positive Verschwenkung der
Zinkenträger in deren Aushubstellung bei gleichzeitigem Ausfahren des Stützrades.

Das Aus- und Einfahren des Stützrades ist bei der erfindungsgemäßen Heuwerbungsmaschine unabhängig von der Höhenverstellbarkeit des Stützrades, die zur Einstellung des Abstandes des
Umlaufkreises der Zinkenspitzen in der Arbeitsstellung der

0163193

Zinken dient. Bei der Höhenverstellung ist es bereits bekannt, eine am Anschlußteil des Stützrades um eine horizontale Achse angelenkte Radgabel vorzusehen, die mittels eines Druckmittelantriebs in der Tragachse verschwenkbar ist.

Hinsichtlich wesentlicher weiterer Ausgestaltungen wird auf die Ansprüche 3 bis 9 verwiesen.

Weitere Vorteile und Einzelheiten ergeben sich aus der nachfolgenden Beschreibung eines in der Zeichnung veranschaulichten Ausführungsbeispiels des Gegenstands der Erfindung. In der Zeichnung zeigen:

Fig. 1    eine Maschine nach der Erfindung in Betriebstellung ihrer Teile in einem zur Fahrtrichtung parallelen Schnitt durch die Drehachse eines Kreiselrechens,

Fig. 2    eine Darstellung der Maschine ähnlich Fig. 1 zur Veranschaulichung der Teile in Transportstellung, und

Fig. 3    eine Einzelheit der Maschine nach Fig. 1 und 2 zur Veranschaulichung der Ausrichtung der Zinken in Arbeits- und in Auszugsstellung.

Die in der Zeichnung lediglich mit ihren für das Verständnis der Erfindung wesentlichen Teilen veranschaulichte Heuwerbungsmaschine umfaßt zumindest einen, in der Regel aber zwei oder mehr Kreiselrechen 1, die um eine aufwärts gerichtete Drehachse 2 umlaufend angetrieben sind.

Der Kreiselrechen 1 weist mindestens zwei, von der Drehachse 2 nach außen gerichtete, im Bereich ihrer äußeren Enden mit Zinken 3 besetzte Zinkenträger 4 auf. Die mit einem radial inneren Bereich in einem Lager 5 um eine Lagerachse 6 verschwenkbar gelagerten und abgestützten Zinkenträger 4 sind an ihren über die Lager 5 einwärts vorspringenden Enden mit einem Steuerhebel 7 verbunden, der auf seiner der Drehachse 2 zugewandten Seite eine Tastrolle 8 trägt, die um eine etwa radial zur Drehachse 2 des Kreiselrechens 1 ausgerichtete
Achse 9 frei drehbar ist. Die Tastrolle 8 ist als Doppelrolle ausgebildet und umfaßt einen innenliegenden Rollenteil 8' mit etwas verringertem Durchmesser. Tastrolle 8 und
Steuerhebel 7 bilden gemeinsam eine Kurbel, die bei Auf- und
Abbewegungen der Tastrolle 8 in Richtung der Drehachse 2
entsprechende Verschwenkbewegungen auf die Zinkenträger 4
in deren Lagern 5 ausüben.

Die Lager 5 sind in einem Drehkörper 10, bei dem dargestellten Beispiel einem etwa umgekehrt topfförmigen Gehäuse, abgestützt, der auf einem Maschinengestellteil 11 axial unverschieblich, jedoch um die Drehachse 2 angetrieben drehbar gelagert ist. Dieses Teil 11 bildet eine Tragachse für den
Kreiselrechen 1, die in einem Maschinengestellteil 12 abgestützt ist. Dieses Teil 12 bildet ein Getriebegehäuse, das
an ein Rahmenrohr 13 angeschlossen ist. Dieses Rahmenrohr 13
ist zusammen mit dem Maschinengestellteil 12 in einer um
90° in die Zeichenebene geklappten Lage veranschaulicht,
erstreckt sich jedoch normalerweise in einer senkrecht zur
Zeichenebene verlaufenden Richtung. Das Rahmenrohr ist üblicherweise mit einer nicht dargestellten Deichsel versehen
und trägt weitere Maschinengestellteile 12 bei mehrkreiseliger
Ausführung. Durch das Rahmenrohr 13 erstreckt sich eine Antriebswelle 14, die über ein nicht dargestelltes Anschlußgetriebe mit der Zapfwelle des landwirtschaftlichen Schleppers
kuppelbar ist, an den für den Betrieb die Maschine angehängt
wird. Die Antriebswelle 14 trägt auf ihrem der Drehachse 2
zugewandten Ende ein Kegelrad 14', das mit einem Gegenkegelrad 15 im oberen Zentralbereich des Drehkörpers 10 kämmt.

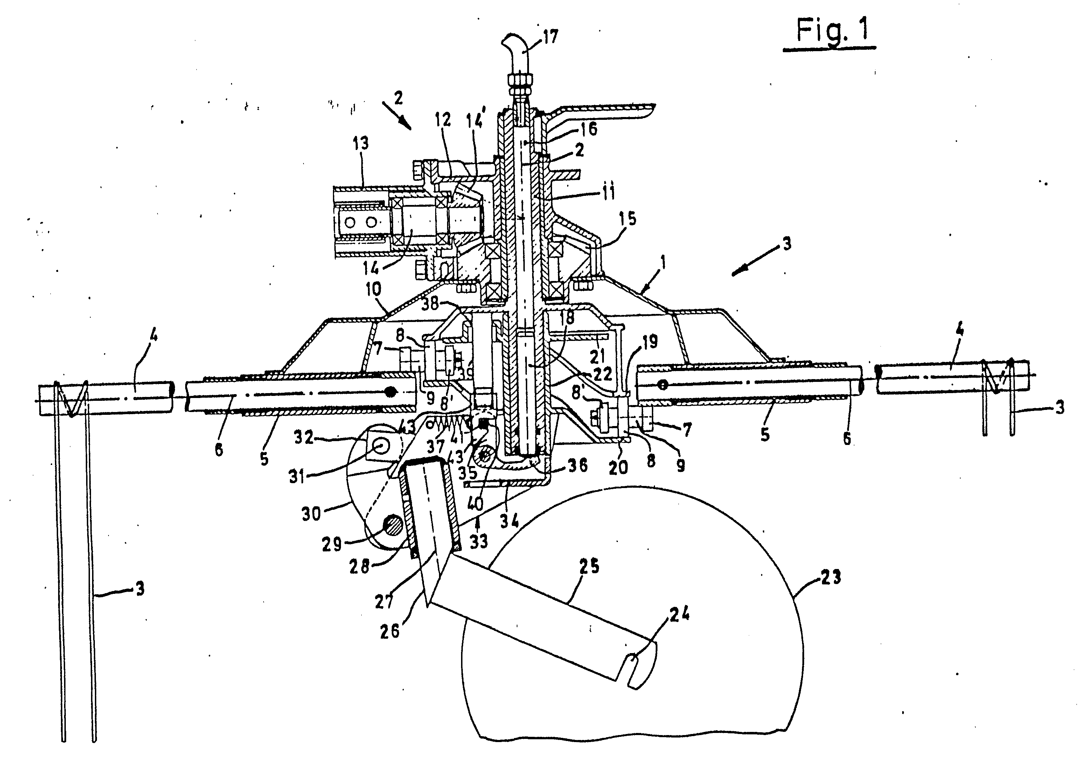

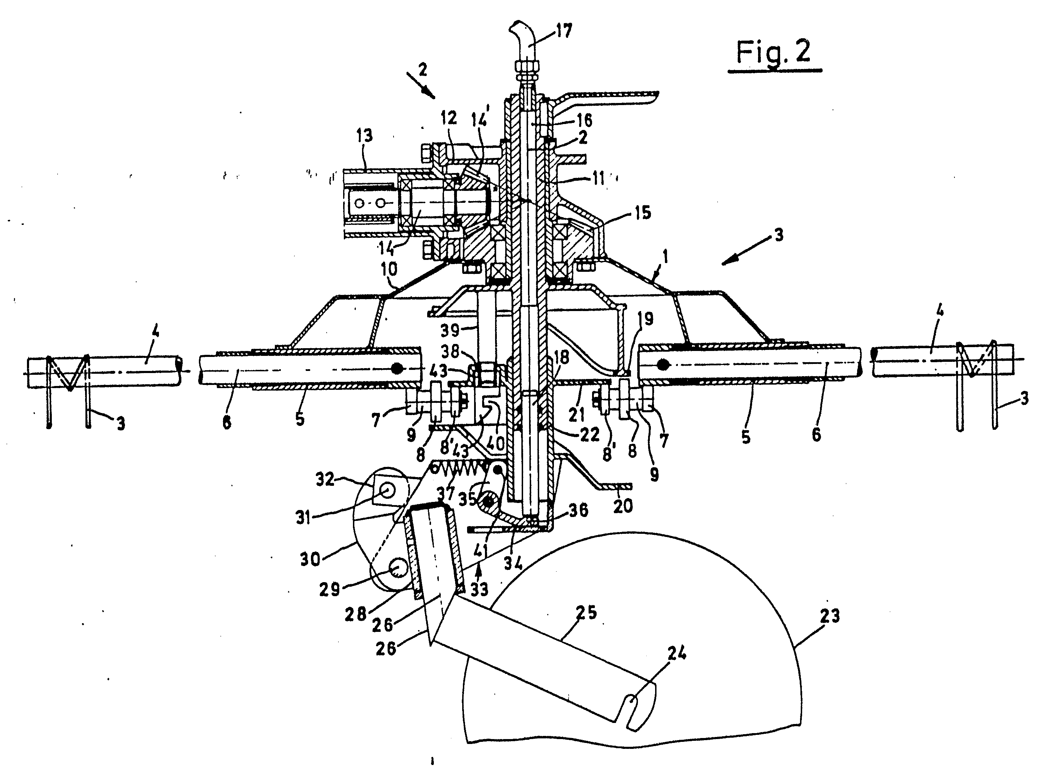

Die sich durch den Drehkörper hindurch erstreckende Tragachse 11 ist mit einer durchgehenden Längsbohrung 16 versehen,
die eine mit Druckmittel über eine an das obere Ende angeschlossene Zuleitung 17 beaufschlagbare Zylinderkammer bildet.
Im unteren Bereich dieser Zylinderkammer ist ein Hubkolben 18
angeordnet, der aus seiner in Fig. 1 eingefahrenen inneren Endstellung in eine in Fig. 2 veranschaulichte äußere Endstellung ausfahrbar ist.

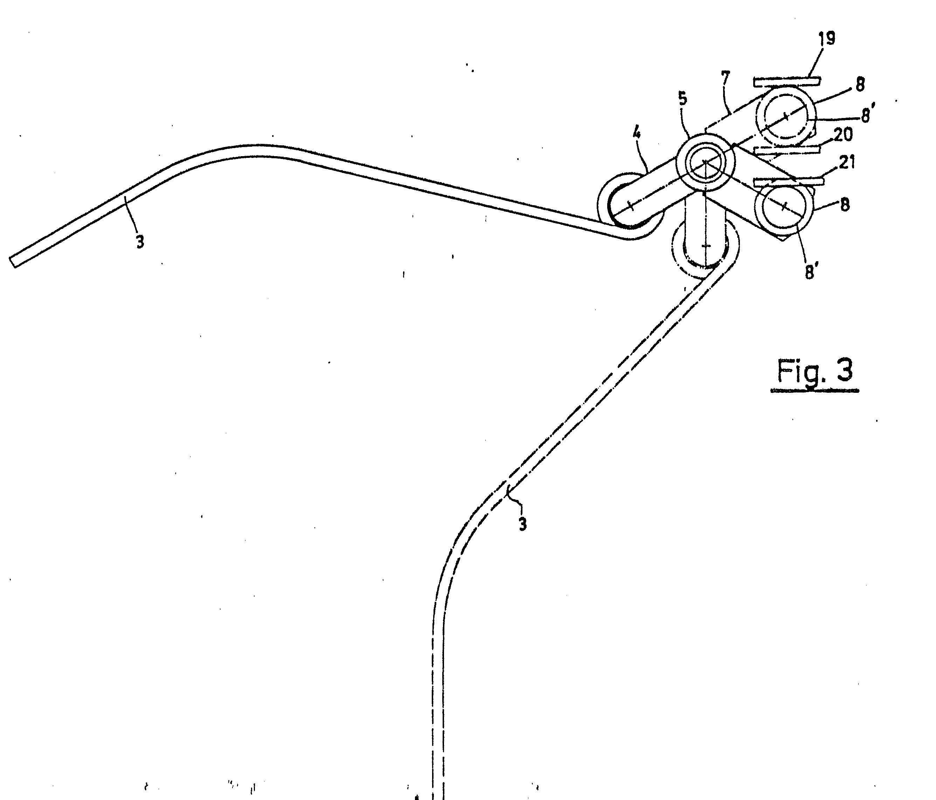

Zur Schwenkbetätigung der Zinkenträger 4 in der Betriebsstellung der Teile gemäß Fig. 1 ist ein Steuergetriebe vorgesehen, das eine erste, an der Tragachse 11 abgestützte,
die Drehachse 2 koaxial im Abstand umgebende Steuerkurve
mit einer oberen 19 und einer zu dieser äquidistanten unteren
Laufbahn 20 für die Tastrollen 8 der Steuerhebel 7 aufweist.
Das Steuergetriebe umfaßt ferner eine koaxial zur ersten
Steuerkurve angeordnete zweite Steuerkurve mit plangestellter
Laufbahn 21, die mittels einer auf der Tragachse 11 unverdrehbar, jedoch axial verschieblich geführten Schiebehülse 22 zusammen mit der unteren Laufbahn 20 der ersten
Steuerkurve in Richtung der Drehachse 2 des Kreiselrechens 1
axial aus einer in Fig. 1 veranschaulichten oberen, wirkungsfreien Endstellung in eine in Fig. 2 dargestellte untere
Endstellung abwärts verschiebbar ist. Bei der Abwärtsbewegung
übernimmt die Laufbahn 21 im Wechsel zu den Laufbahnen 19,20
der ersten Steuerkurve den Führungseingriff mit den Tastrollen 8 der Steuerhebel 7 mit der Folge, daß in der unteren
Endstellung gemäß Fig. 2 sämtliche Zinkenträger 4 in eine
Schwenklage überführt sind, in der sich die Zinken 3 annähernd horizontal erstrecken, wie dies in Fig. 3 in ausgezogenen Linien versinnbildlicht ist. Die Fig. 3 zeigt in
strichpunktierten Linien die Ausrichtung der Zinken 3 in
Arbeitsstellung, welche die Zinken bei Steuerung durch die
Laufbahnen 19,20 im vorderen Halbbereich des Umlaufkreises
der Zinkenträgerspitzen einnehmen.

Unter dem Kreiselrechen 1 ist ein Stützrad 23 angeordnet,
das um eine Achse 24 drehbar an einer Radgabel 25 gelagert
ist. Diese Radgabel 25 ist mittels eines Zapfens 26 um
eine Aufrechtachse 27 in einem Lager 28 drehbar gelagert,
das an einer um eine horizontale Achse 29 schwenkbaren
Schwinge 30 angebracht ist. Diese Schwinge 30 ist bei 31
gelenkig mit einer Stellstange 32 verbunden, mittels der die

0163193

Schwenklage der Schwinge 30 und damit die Höheneinstellung des Stützrades 23 einstell- und feststellbar ist. Das Schwenklager für die Schwinge 30 ist an einem Anschlußteil 33 für die Stützradkonstruktion angebracht, an dem sich auch das andere Ende der vorzugsweise längenveränderlichen Stellstange 32 abstützt.

Der Anschlußteil 33 des Stützrades 23 ist fest mit dem unteren Endbereich der Schiebehülse 22 verbunden, die dementsprechend den Trägerteil für die Stützradkonstruktion bildet. Wenn daher die Schiebehülse aus ihrer oberen Endstellung gemäß Fig. 1 in ihre untere Endstellung gemäß Fig. 2 verschoben wird, verlagert sich dementsprechend das Stützrad 23 aus einer oberen Betriebsstellung in eine untere Transportstellung.

Am unteren Ende der Schiebehülse 22 ist ein das untere Ende des Hubkolbens 18 im Abstand untergreifender Widerlageransatz 34 vorgesehen, der auch am Anschlußteil 33 befestigt sein kann. An der Schiebehülse 22 bzw. am Anschlußteil 33 ist weiterhin schwenkbar eine Schwenkklinke 35 abgestützt, die mit einem Betätigungshebel 36 verbunden ist. Der Betätigungshebel 36 untergreift das untere Ende des Hubkolbens 18 und wird von diesem bei einer Betätigung in Fig. 1 im Uhrzeigersinn verschwenkt, bis er sich auf den Widerlageransatz 34 auflegt. Dadurch wird die Schwenkklinke 35 , die Teil einer Verriegelungsvorrichtung ist, in eine Entriegelungsstellung verschwenkt, und zwar gegen die Wirkung einer Feder 37, die bestrebt ist, die Schwenkklinke 35 und mit dieser den Betätigungshebel 36 in ihrer in Fig. 1 veranschaulichten Verriegelungsstellung zu halten.

Die Verriegelungsvorrichtung umfaßt ferner einen Zapfen 39, der an der Unterseite des Tragteils für die obere Laufbahn 19 befestigt ist und sich parallel zur Drehachse 2 des Kreiselrechens 1 abwärts erstreckt und eine Öffnung 38 im Tragteil der plangestellten Laufbahn 21 durchgreift. Dieser Zapfen ist in seinem unteren Bereich mit einer Rastkerbe 40 versehen, in die ein Riegel 41 an der Schwenkklinke 35 einfallen kann. Die Rastkerbe 40 ist dabei in einem koaxial höhenverstellbaren unteren Teil 43 des Zapfens ausgebildet.

Wird ausgehend von der Stellung der Teile in Fig. 1 der Zylinderraum 16 mit Druckmittel beaufschlagt, so fährt der Hubkolben 18 nach unten aus, wodurch der Betätigungshebel 36 abwärts auf den Widerlageransatz 34 verschwenkt wird und die Schwenkklinke zur Aufhebung der Verriegelung mitnimmt. Bei weiterem Ausfahren des Hubkolbens 18 wird nun die Schiebehülse 22 mitsamt dem Anbauteil 33 und dem Stützrad 23 abwärts bewegt, bis die Teile ihre in Fig. 2 veranschaulichte Transportstellung der Maschine erreicht haben, in der sich das Stützrad in einer unteren Endstellung befindet und in der sich die Zinken 3 im wesentlichen horizontal erstrecken.

Für die Rückkehr der Teile aus ihrer Stellung in Fig. 2 in die nach Fig. 1 genügt eine Entlüftung des Zylinderraumes 16, wodurch sich dann unter Schwerkraft der Maschine die Teile in die Arbeitsstellung der Maschine gemäß Fig. 1 zurückbewegen.

-.-.-.-.-.-.-.-.-.-.-.-

Patentansprüche:

1. Heuwerbungsmaschine mit mindestens einem um eine aufwärtsgerichtete Drehachse umlaufend angetriebenen Kreiselrechen, der mit Zinken besetzte Zinkenträger aufweist, mit einem Steuergetriebe, durch das die Zinkenträger zwischen einer Arbeitsstellung, in der sich die Zinken abwärts zum Boden hin erstrecken, und einer Aushubstellung, in der die Zinken eine etwa horizontale Ausrichtung einnehmen, verschwenkbar sind, mit einer Stellvorrichtung, die bei Betätigung einer Antriebsvorrichtung sämtliche Zinkenträger in die Aushubstellung überführt, und mit einem unter dem bzw. jedem Kreiselrechen angeordneten, mittels eines Anschlußteils am Maschinengestell abgestützten, höhenverstellbaren Stützrad, dadurch gekennzeichnet, daß der Anschlußteil (33) des Stützrades (23) an einem axial entlang der Drehachse (2) des Kreiselrechens (1) zwischen einer oberen Betriebsstellung und einer unteren Transportstellung am Maschinengestell (11,12,13) beweglich geführten Trägerteil (22) angebracht ist, und daß die Antriebsvorrichtung (16,17,18) für die Stellvorrichtung (21) zugleich die Antriebsvorrichtung für den Trägerteil bildet.

2. Heuwerbungsmaschine nach Anspruch 1, bei der die Zinkenträger an ihren der Drehachse des Kreiselrechens zugewandten Enden mit Steuerhebeln und Tastrollen versehen sind, das Steuergetriebe eine erste, am Maschinengestell abgestützte, die Drehachse koaxial im Abstand umgebende und sich in ihrem Axialverlauf ändernde Steuerkurve mit einer oberen und einer zu dieser äquidistanten unteren Laufbahn für die Tastrollen
der Steuerhebel aufweist, und das Steuergetriebe eine zweite,
koaxial zur ersten Steuerkurve angeordnete Steuerkurve mit
plangestellter Laufbahn umfaßt, die mittels einer auf einer
längsdurchbohrten Tragachse des Maschinengestells geführten
Schiebehülse zusammen mit der unteren Laufbahn der ersten
Steuerkurve durch eine Antriebsvorrichtung in Richtung der
Drehachse des Kreiselrechens axial aus einer oberen wirkungsfreien Endstellung in eine untere Endstellung abwärts verschiebbar ist, in der sie im Wechsel mit der ersten Steuerkurve den Führungseingriff mit den Tastrollen der Steuerhebel übernimmt, dadurch gekennzeichnet, daß die zweite
Steuerkurve mit ihrer plangestellten Laufbahn (21) die bei
ihrer Abwärtsbewegung in ihre untere Endstellung die Zinkenträger (4) in die Aushubstellung verschwenkende Stellvorrichtung und die Schiebehülse (22) den mit dem Anschlußteil (33)
des Stützrades (23) verbundenen Trägerteil bildet.

3.    Maschine nach Anspruch 1 oder 2, gekennzeichnet durch
eine den Trägerteil (22) in seiner oberen Endstellung gegen
eine Abwärtsbewegung sichernde Verriegelungsvorrichtung (39,40;
35,41) mit einem bei Betätigen der Antriebsvorrichtung (16,
17,18) für die Abwärtsbewegung des Trägerteils (22) aus
seiner Verriegelungsstellung auslösbaren Riegel (35,41).

4.    Maschine nach Anspruch 2 oder 3, dadurch gekennzeichnet, daß die Längsbohrung (16) der Tragachse (11) des Maschinengestells (12,13) eine mit Druckmittel beaufschlagbare
Zylinderkammer bildet, aus deren unterem Ende zur Abwärtsbewegung der Schiebehülse (22) ein Hubkolben (18) ausfahrbar
ist.

5.    Maschine nach Anspruch 4, dadurch gekennzeichnet, daß
am unteren Ende der Schiebehülse (22) oder am Anschlußteil
(33) ein das untere Ende des Hubkolbens (18) im Abstand untergreifender Widerlageransatz (34) vorgesehen ist.

0163193

6. Maschine nach Anspruch 3,4 und 5, <u>dadurch gekenn-</u><u>zeichnet</u>, daß der auslösbare Riegel der Verriegelungsvorrichtung als an der Schiebehülse (22) oder am Anschlußteil (33) abgestützte Schwenkklinke (35) mit einem Betätigungshebel (36) ausgebildet ist, der das untere Ende des Hubkolbens (18) untergreift und sich in Entriegelungsstellung der Schwenkklinke als Druckübertragungsglied auf den Widerlageransatz (34) der Schiebehülse auflegt.

7. Maschine nach Anspruch 6, <u>dadurch gekennzeichnet</u>, daß an der Schwenkklinke (35) eine diese in Verriegelungsstellung zu schwenken bestrebte Zugfeder (37) angreift.

8. Maschine nach einem oder mehreren der Ansprüche 3 bis 7, <u>dadurch gekennzeichnet</u>, daß die Verriegelungsvor-richtung einen an der Unterseite des Tragteils der oberen Laufbahn (19) der ersten Steuerkurve befestigten, sich parallel zur Drehachse (2) des Kreiselrechens (1) abwärts und durch eine Öffnung (38) im Tragteil der plangestellten Laufbahn (21) der zweiten Steuerkurve hindurcherstreckenden Zapfen (39) mit einer Rastkerbe (40) für den auslösbaren Riegel (35,41) umfaßt.

9. Maschine nach Anspruch 8, <u>dadurch gekennzeichnet</u>, daß die Rastkerbe (40) in einem axial höhenverstellbaren unteren Teil (43) des Zapfens (39) ausgebildet ist.

Fig. 2

0163193

Fig. 3

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 960 354 (STOLL)<br>* Seite 6, letzter Abschnitt - Seite 7, Zeile 10; Anspruch 7; Figuren 7,8 * | 1 | A 01 D 78/12 |
| A | FR-A-2 110 930 (BUCHER-GUYER)<br>* Seite 9, Zeile 5 - Seite 10, Zeile 16 * & DE - A - 2 167 111 (Kat. D) | 1 | |
| A | FR-A-2 462 092 (NIEMEYER SOHNE GmbH & CO.)<br>*Seite 5, Zeile 16 - Seite 10, Zeile 37 * & DE - A - 2 930 152 (Kat. D) | 2 | |
| A | FR-A-2 455 425 (BUCHER-GUYER) | | RECHERCHIERTE SACHGEBIETE (Int. Cl.4)<br><br>A 01 D |
| A | FR-A-2 513 068 (POTTINGER) | | |

Der vorliegende Recherchenbericht wurde für alle Patentansprüche erstellt.

| Recherchenort<br>DEN HAAG | Abschlußdatum der Recherche<br>23-07-1985 | Prüfer<br>DE LAMEILLIEURE D. |
|---|---|---|